# EUROPEAN PATENT SPECIFICATION

(11) **EP 3 752 563 B1**
(45) Date of publication and mention of the grant of the patent: **11.10.2023**
(21) Application number: 19706260.7
(22) Date of filing: 13.02.2019
(51) Int. Cl.: C08L 77/06, C08K 7/20, C08K 7/22, B29C 45/17

(54) **POLYAMIDE COMPOSITION FOR LIQUID-ASSISTED INJECTION MOULDING APPLICATIONS**
POLYAMIDZUSAMMENSETZUNG FÜR FLÜSSIGKEITSUNTERSTÜTZTE SPRITZGIESSANWENDUNGEN
COMPOSITION DE POLYAMIDE POUR APPLICATIONS DE MOULAGE PAR INJECTION ASSISTÉE PAR LIQUIDE

(30) Priority: 14.02.2018 WO PCT/CN2018/076857
(43) Date of publication of application: 23.12.2020
(73) Proprietor: BASF SE, 67056 Ludwigshafen am Rhein (DE)
(72) Inventor: WANG, Huanbing, Shanghai, 201108 (CN)
(74) Representative: BASF IP Association
(86) International application number: PCT/EP2019/053551
(87) International publication number: WO 2019/158588

(56) References cited:
- EP-A1- 1 136 221
- WO-A1-2012/048255
- WO-A1-2017/191269

## Description

The invention relates to a polyamide composition which exhibits excellent processing properties in the preparation of articles using liquid-assisted injection moulding processes. More particular, when using the polyamide composition of the invention in liquid-assisted injection moulding processes, articles, in particular hollow articles such as tubes, pipes, conduits, having excellent surface properties and improved resistance against chemicals, in particular alcohols such as glycols are obtainable. The articles may be used in particular be used for liquid storage and liquid transportation applications, for example in automotive applications.

### PRIOR ART

Glass fibre filled polyamide products are widely used as structural components and fluid storage parts or fluid transportation parts. Such parts typically have hollow shapes. When using polymer melts comprising glass fibres during the processing of polymer compositions, e.g. during injection moulding processes, the glass fibres tend to float onto the surface and thus resulting in an uneven, unattractive surface. However, the roughness of the article surface is not only an aesthetic disadvantage, but also deteriorates the function of the article, in particular in fluid storage or fluid transportation applications.

Parts used in automotive applications, like tanks, ducts for fuel, air or coolant in combustion engines are hollow bodies which must mechanically withstand external aggression but also require an inner face which is as smooth as possible to avoid disturbing the flow of fluids therein. In addition, such articles have complex shapes to allow their assembly in the engine.

EP 1 136 221 A1 discloses a method for manufacturing a hollow body by injecting a liquid composition into a mould. The composition includes a thermoplastic polymer and reinforcing fibres with a length/diameter ratio ≥ 20 and particles with a length/diameter ratio ≤ 20. The injection liquid may be water and the composition includes a nucleating agent. The thermoplastic may be 10-60 wt.-% of the whole composition. In one embodiment, the thermoplastic matrix comprises at least one polyamide. The manufacturing method uses liquid-assisted injection moulding technology, a refinement of gas injection moulding technology. It is a high efficient method to form tubular articles like fluid transportation systems, for automotive applications. WO 2017 /191269A1 describes polyamide moulding compositions and moulded articles made thereof, wherein said moulding compositions comprise a first and a second polyamide component, a fibrous reinforcing agent and a heat stabilizer.

Liquid-assisted injection moulding was described for example in Kunststoffe, vol. 88, no. 1, 1998, pages 34-36. Briefly, a certain amount of material sufficient to completely fill the mould is injected into a mould of corresponding shape to that of the part to be moulded. Then, a needle to allow the supply of a liquid, preferably water, under pressure is introduced into the mass thus injected at one or more points. The liquid generates a cavity in the melt injected by forcing the polymer to conform to the mould walls. After cooling, the part is demoulded. In an alternative embodiment, the mould is completely filled with the thermoplastic composition, the pressurized liquid is injected into said body for discharging a portion of the material out of the mould and thereby forming a cavity while maintaining a portion of the material against the walls of the mould until solidification.

However, to prepare articles that will allow circulating fluids without disturbance, it is necessary to obtain a particular smooth inner surface as well as uniform wall thickness. In addition, for reasons of productivity, it is also required that the moulding cycle time is as fast as possible. These requirements are currently difficult to obtain simultaneously limiting the use of this technique for the manufacture of certain items, including conduits for fuel, coolant combustion engines or internal combustion. As the processing is more complicated than for normal injection moulding, the technique faces more challenges to form a smooth, high gloss surface. Common additives to improve gloss often deteriorate the glycol resistance. It is important to find a solution to balance the mechanical properties, surface quality and glycol resistance performance.

An object of the present invention is to remedy these drawbacks by proposing a fibre filled thermoplastic material, which is appropriate to be used in injection moulding processes, in particular in liquid-assisted injection moulding processes and which combines particular characteristics that allow to obtain articles having the characteristics of surface condition, shape uniformity and improved cycle time and satisfactory for an industrial manufacturing.

### INVENTION

The present invention relates to a polyamide composition according to claim 1, comprising
(i) at least one aliphatic polyamide comprising repeating units derived from the polycondensation of hexamethylenediamine and adipic acid;
(ii) at least one semi-aromatic polyamide comprising repeating units derived from the polycondensation of hexamethylenediamine, adipic acid and at least one aromatic dicarboxylic acid;
(iii) at least one fibrous filler;
(iv) at least one particulate filler;
(v) at least one heat stabilizer;
(vi) at least one further additive;
(vii) optionally at least one polyamide selected from homopolymers of ε -caprolactam (PA6), copolymers of ε -caprolactam with hexamethylenediamine and terephthalic acid and copolymers of ε -caprolactam with hexamethylenediamine and isophthalic acid; and
(viii) optionally at least one polyamide selected from homopolymers of hexamethylenediamine and sebacic acid (PA6.10), wherein components (i) - (viii) are present in amounts as detailed in claim 1.

It was surprisingly found by the inventors that by introducing at least one semi-aromatic polyamide as defined above in a polyamide composition, comprising the at least one aliphatic polyamide and the recited fillers, an improved polyamide composition is obtained which may be used for the production of articles having significantly improved surface properties with respect to smoothness and gloss whereas resistance against chemicals such as alcohols, in particular glycols, is not significantly deteriorated.

The components of the polyamide composition according to the invention are described in more detail in the following.

The inventive polyamide composition comprises at least one aliphatic polyamide comprising repeating units derived from the polycondensation of hexamethylenediamine and adipic acid. The at least one aliphatic polyamide may optionally comprise further aliphatic repeating units derived from monomers which are copolymerizable with hexamethylenediamine and adipic acid.

Preferably, the at least one aliphatic polyamide has a number average molecular weight (Mn), determined by gel permeation chromatography (GPC) of 10,000 to 30,000 g/mol, in particular 12,000 to 24,000 g/mol.

In one embodiment of the invention, the at least one aliphatic polyamide is selected from homopolymers of hexamethylenediamine and adipic acid (PA6.6), copolymers of hexamethylenediamine, adipic acid and ε -caprolactam (PA6.6/6) and mixtures or blends of these aliphatic polyamides. If the aliphatic polyamide is a homopolymer comprising repeating units derived from ε -caprolactam, these repeating units are present in an amount of 1 to 30 mol.-%, preferably 5 to 20 mol-% and in particular 7 to 15 mol-%, based on the total weight of the at least one aliphatic polyamide. The remainder of the polyamide is then preferably composed of repeating units derived from hexamethylenediamine and adipic acid in a molar ratio of 1:1.

The at least one aliphatic polyamide is present in the polyamide composition in amounts of 40 to 70 wt.-%, preferably 45.0 to 67.5 wt.-%, based on the total weight of the polyamide composition.

If the at least one aliphatic polyamide is selected from copolymers of hexamethylenediamine, adipic acid and ε -caprolactam (PA6.6/6), only the repeating units derived from hexamethylenediamine and adipic acid account to the amount of 40 to 70 wt.-%, preferably 45.0 to 67.5 wt.-%, of the at least one aliphatic polyamide based on the total weight of the polyamide composition.

As a second component, the polyamide composition comprises least one semi-aromatic polyamide comprising repeating units derived from the polycondensation of hexamethylenediamine, adipic acid and at least one aromatic dicarboxylic acid.

In order to be able to improve the properties of the polyamide composition, it was found to be particular advantageous, if the at least one semi-aromatic polyamide comprises repeating units derived from at least one aromatic dicarboxylic acid in an amount of at least 5 mol-%, based on the total weight of the at least one semi-aromatic polyamide. In a more preferred embodiment of the invention, the least one semi-aromatic polyamide comprises repeating units derived from at least one aromatic dicarboxylic acid in an amount of 5 to 50 mol-% and in particular 10 to 30 mol-%, based on the molar composition of the least one semi-aromatic polyamide.

Thus, in other words, the semi-aromatic polyamide comprises units repeating derived from at least one dicarboxylic acid and repeating units derived from at least one diamine in a molar ratio of 1:1, wherein the repeating units derived from at least one dicarboxylic acid comprise at least one repeating units derived from at least one aromatic dicarboxylic acid and wherein the at least one repeating unit derived from at least one aromatic dicarboxylic acid accounts for 10 to 100 mol-%, preferably 20 to 60 mol-%, of the entire repeating units derived from dicarboxylic acids.

The semi-aromatic polyamides are preferably obtained from polycondensation reactions of aliphatic diamines, aliphatic dicarboxylic acids, aromatic diamines and/or aromatic dicarboxylic acids. In a further preferred embodiment, the semi-aromatic polyamide may be obtained from the polycondensation of aliphatic diamines, aliphatic dicarboxylic acids and aromatic dicarboxylic acids.

Suitable aliphatic diamines comprise all aliphatic diamines commonly used in the preparation of polyamides. Preferred aliphatic dicarboxylic acids include dicarboxylic acids of the general formula 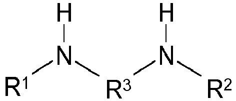 wherein
R¹ and R² each independently represent a hydrogen atom or an aliphatic, saturated or unsaturated, linear or branched hydrocarbon group having 1 to 5, preferably 1 to 3, carbon atoms; and
R³ represents an aliphatic, saturated or unsaturated, linear or branched hydrocarbon group having 1 to 20, preferably, 2 to 10, and in particular 3 to 6 carbon atoms.

In a preferred embodiment, R¹ and R² represent a hydrogen atom.

Preferred aliphatic diamines include hexamethylene diamine and / or the 5-methyl pentamethylene diamine. In a particular preferred embodiment hexamethylene diamine is used.

Suitable aliphatic dicarboxylic acids comprise all aliphatic dicarboxylic acids commonly used in the preparation of polyamides. Preferred aliphatic dicarboxylic acids include dicarboxylic acids of the general formula 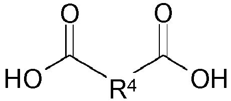 wherein
R⁴ represents an aliphatic, saturated or unsaturated, linear or branched hydrocarbon group having 1 to 20, preferably, 2 to 10, and in particular 3 to 6 carbon atoms.

In a particular preferred embodiment, adipic acid is used as aliphatic dicarboxylic acid.

In a preferred embodiment of the invention, the semi-aromatic polyamide comprises repeating units derived from aliphatic dicarboxylic acids, in particular derived from adipic acid, in amounts of from 0 mol-% to 90 mol-%, based on the total amount of repeating units derived from dicarboxylic acids, and more preferably from 40 mol-% to 80 mol-% of repeating units derived from dicarboxylic acids, whereas the remainder of the of repeating units derived from dicarboxylic acids is derived from aromatic dicarboxylic acids.

Suitable aromatic diamines comprise - if present - all aromatic diamines commonly used in the preparation of polyamides. Preferred aromatic diamines include diamines of the general formula 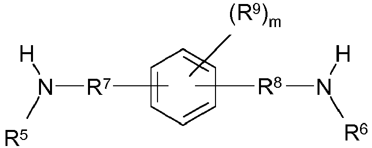 wherein
R⁵ and R⁶ each independently represent a hydrogen atom or an aliphatic, saturated or unsaturated, linear or branched hydrocarbon group having 1 to 5, preferably 1 to 3, carbon atoms;
R⁷ and R⁸ each independently represent a single bond or an aliphatic or aromatic, saturated or unsaturated, linear, branched or cyclic hydrocarbon group having 1 to 20, preferably, 2 to 10, and in particular 3 to 6 carbon atoms;
R⁹ represents a hydrogen atom or an aliphatic hydrocarbon group having 1 to 3 carbon atoms; and
n represents an integer from 0 to 4.

In a preferred embodiment, R⁷ and R⁸ each represent a single bond and the amine group is directly bonded to the aromatic ring.

In a preferred embodiment, R⁵ and R⁶ each represent a hydrogen atom.

In a further preferred embodiment, R⁹ represents a hydrogen atom.

R⁷ and R⁸ may be positions in ortho-, meta-, or para-position to each other at the aromatic ring. It is particular preferred that the groups R⁷ and R⁸ are position meta- or para-position.

Preferred aromatic diamines include m-phenylene diamine and p-phenylene diamine. In a particular preferred embodiment no aromatic diamine is used.

Suitable aromatic dicarboxylic acids comprise all aromatic dicarboxylic acids commonly used in the preparation of polyamides. Preferred aromatic dicarboxylic acids include dicarboxylic acids of the general formula 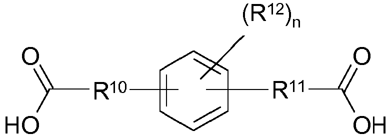 wherein
R¹⁰ and R¹¹ each independently represent a single bond or an aliphatic or aromatic, saturated or unsaturated, linear, branched or cyclic hydrocarbon group having 1 to 20, preferably, 2 to 10, and in particular 3 to 6 carbon atoms;
R¹² represents a hydrogen atom or an aliphatic hydrocarbon group having 1 to 3 carbon atoms; and
n represents an integer from 0 to 4.

In a preferred embodiment, R¹⁰ and R¹¹ each represent a single bond and the carboxylic group is directly bonded to the aromatic ring.

In a further preferred embodiment R¹² represents a hydrogen atom.

R¹⁰ and R¹¹ may be positions in ortho-, meta-, or para-position to each other at the aromatic ring. It is particular preferred that the groups R¹⁰ and R¹¹ are position meta- or para-position.

In a particular preferred embodiment, the at least one aromatic dicarboxylic acid is selected from terephthalic acid and isophthalic acid.

In a further preferred embodiment of the invention, the at least one repeating unit derived from at least one aromatic dicarboxylic acid is derived from terephthalic acid, optionally in combination with at least one further aromatic dicarboxylic acid, in particular in combination with isophthalic acid. Preferably, the the at least one repeating unit derived terephthalic acid is comprised in combination with at least one repeating unit derived from at least one aliphatic dicarboxylic acid, in particular adipic acid, and optionally further in combination with at least at least one repeating unit derived from at least one further aromatic dicarboxylic acid, in particular isophthalic acid.

In a further preferred embodiment, the semi-aromatic polyamide comprises repeating units derived from aromatic dicarboxylic acids, in particular derived from terephthalic acid and optionally derived from at least on further dicarboxylic acid, preferably isophthalic acid, in amounts of from 10 mol-% to 100 mol-%, based on the total amount of repeating units derived from dicarboxylic acids, and more preferably from 20 mol-% to 60 mol-% of repeating units derived from dicarboxylic acids, whereas the remainder of the of repeating units derived from dicarboxylic acids is derived from aliphatic dicarboxylic acids.

In this embodiment, the total amount of repeating units derived from terephthalic acid is preferably from 10 mol-% to 100 mol-%, based on the total amount of repeating units derived from aromatic dicarboxylic acids, more preferably 10 mol-% to 60 mol-%, and in particular from 20 mol-% to 50 mol-%, based on the total amount of repeating units derived from aromatic dicarboxylic acids; and
the total amount of repeating units derived from at least one optional further aromatic dicarboxylic acid, in particular isophthalic is preferably from 0 mol-% to 90 mol-%, based on the total amount of repeating units derived from aromatic dicarboxylic acids, more preferably 40 mol-% to 90 mol-%, and in particular from 50 mol-% to 80 mol-%, based on the total amount of repeating units derived from aromatic dicarboxylic acids.

In one particular preferred embodiment of the invention, the semi-aromatic polyamide comprises repeating units derived from
(a) terephthalic acid in an amount of from 10 to 60 mol-%, based on the total amount of repeating units derived from dicarboxylic acids, and
(b) adipic acid in an amount of from 40 to 90 mol-%, based on the total amount of repeating units derived from dicarboxylic acids;
wherein the total amount of terephthalic acid and adipic acid amounts up to 100 mol-% of the amount of repeating units derived from dicarboxylic acids.

In an alternative particular preferred embodiment of the invention, the semi-aromatic polyamide comprises repeating units derived from
(a) terephthalic acid in an amount of from 10 to 60 mol-%, based on the total amount of repeating units derived from dicarboxylic acids, and
(b) isophthalic acid in an amount of from 40 to 90 mol-%, based on the total amount of repeating units derived from dicarboxylic acid;
wherein the total amount of terephthalic acid and isophthalic acid amounts up to 100 mol-% of the amount of repeating units derived from dicarboxylic acids.

In a further alternative particular preferred embodiment of the invention, the semi-aromatic polyamide comprises repeating units derived from
(a) terephthalic acid and at least one further aromatic dicarboxylic acid in an amount of from 10 to 60 mol-%, based on the total amount of repeating units derived from dicarboxylic acids, and
(b) adipic acid in an amount of from 40 to 90 mol-%, based on the total amount of repeating units derived from dicarboxylic acids;

wherein the total amount of adipic acid, terephthalic acid and the at least one further aromatic dicarboxylic acid amounts up to 100 mol-% of the amount of repeating units derived from dicarboxylic acids, and
wherein the terephthalic acid accounts for 10 to 60 mol-%, based on the total amount of repeating units derived from aromatic dicarboxylic acids, and the at least one further aromatic acid, in particular isophthalic acid, accounts for 40 to 90 mol-%, based on the total amount of repeating units derived from aromatic dicarboxylic acids.

Thus, in one preferred embodiment of the invention, the polyamide composition comprises at least one semi-aromatic polyamide selected from homopolymers and/or copolymers of hexamethylenediamine, adipic acid and terephthalic acid and/or isophthalic acid.

In one particular preferred embodiment of the invention, the at least one semi-aromatic polyamide is selected from copolymers of hexamethylenediamine, adipic acid and terephthalic acid (PA6.6/6.T), copolymers of hexamethylenediamine, adipic acid and isophthalic acid (PA6.6/6.I), copolymers of hexamethylenediamine, adipic acid, terephthalic acid and isophthalic acid (PA6.6/6.T/6.I) and mixtures of these semi-aromatic polyamides.

Preferably, the at least one semi-aromatic polyamide has a number average molecular weight (Mn), determined by gel permeation chromatography (GPC) of 10,000 g/mol to 28,000 g/mol, in particular 12,000 g/mol to 22,000 g/mol.

The at least one aromatic polyamide is present in the polyamide composition in amounts of 4 to 30 wt.-%, preferably 5 to 25 wt.-%, based on the total weight of the polyamide composition.

The polyamide composition of the invention further comprises at least one fibrous filler and at least one particulate filler. Preferably, the at least one fibrous filler is characterized in being substantially composed of fibrous particles having an aspect ratio of length to diameter (L/D) of more than 20 and the particulate filler is characterized in being substantially composed of particulate particles having an aspect ratio LID of less than 20.

The at least one fibrous filler is preferably selected from glass fibres, ceramic fibres, carbon fibres, and thermostable polymer fibres. Preferably, said fibrous filler is fibre glass. The glass fibres preferably used have a length between 1 mm and 5 mm and a diameter of between 5 µm and 20 µm, prior to the preparation of the polyamide composition by mixing the components (i) to (vi). During the mixing and kneading with molten polymer, the fibres break and have an average length in the polyamide composition between 300 and 500 µm.

Advantageously, the fibrous filler may comprise particles having a size which improves certain properties of the composition. Moreover, it can include a sizing resistant glycolysis, especially when the article or the workpiece is intended to be in contact with a liquid containing alcohol such as cooling fluids or fuels.

The at least one particulate filler is selected from mineral fillers, glass beads, glass flakes, milled glass fibres. In a preferred embodiment of the invention, the particulate filler is preferably of glass beads, preferably glass beads having a diameter between 10 µm and 60 µm, or milled glass fibres of length less than 250 µm and a diameter less than 20 µm. Particular preferred are glass beads.

Thus, in one particular preferred embodiment of the invention, the polyamide composition comprises at least one fibrous filler selected from glass fibres and the at least particulate filler selected from glass beads.

The total amount of fibrous and particulate fillers in the composition may vary within wide limits and is, for example, between 10 wt.-% and 60 wt.-%, preferably 20 wt.-% and 45 wt.-%, based on the total weight of the composition. The weight ratio of the particulate filler and the fibrous filler is preferably between 0.2 and 10, preferably between 0.5 and 4.

The at least one fibrous filler is present in the polyamide composition in amounts of 9 to 40 wt.- %, preferably 15 to 30 wt.-%, based on the total weight of the polyamide composition.

The at least one particulate filler is present in the polyamide composition in amounts of 1 to 20 wt.-%, preferably 5 to 15 wt.-%, based on the total weight of the polyamide composition.

The polyamide composition further comprises at least one heat stabilizer. The heat stabilizer may be selected from copper salts, iron salts, phosphate stabilizers, aromatic amines and/or phenolic antioxidants.

The at least one heat stabilizer is present in an amount of 0.1 to 2 wt.-%, based on the total weight of the polyamide composition, in particular 0.1 to 1 wt.-%.

The polyamide composition further comprises at least one further additive including all additives commonly used in polyamide compositions. Preferably, the at least one additive is selected from colorants, mould release agents, flame retardants, toughening modifiers, and additives to facilitate the mixing of the components or the moulding of the composition. Particular preferred embodiments comprise colorants, such as dyes and pigments, and/or mould release agents as additives.

The at least one additive is preferably present in an amount of 0.1 to 2 wt.-%, based on the total weight of the polyamide composition, in particular 0.1 to 1 wt.-%.

Furthermore, the polyamide composition according to the invention may optionally comprise:
(vii) at least one polyamide selected from homopolymers of ε -caprolactam (PA6), copolymers of ε -caprolactam with hexamethylenediamine and terephthalic acid and copolymers of ε -caprolactam with hexamethylenediamine and isophthalic acid; and/or
(viii) at least one polyamide selected from homopolymers of hexamethylenediamine and sebacic acid (PA6.10).

The homopolymers of ε -caprolactam (PA6), copolymers of ε -caprolactam with hexamethylenediamine and terephthalic acid, copolymers of ε -caprolactam with hexamethylenediamine and isophthalic acid and homopolymers of hexamethylenediamine and sebacic acid (PA6.10) are able to further improve the surface properties, in particular the surface gloss, of polyamide composition and the articles prepared therefrom. PA6 may be added in accordance to improve the flowability of the polyamide composition. Copolymers of ε -caprolactam with hexamethylenediamine and terephthalic acid or isophthalic acid are able to improve the balance between flowability, heat resistance, water absorption and dimension stability. PA6.10 is able to further enhance glycol resistance performance.

The at least one polyamide selected from homopolymers of ε -caprolactam (PA6), copolymers of ε -caprolactam with hexamethylenediamine and terephthalic acid and copolymers of ε - caprolactam with hexamethylenediamine and isophthalic acid preferably has a number average molecular weight (Mn), determined by gel permeation chromatography (GPC) of 10,000 g/mol to 28,000 g/mol, in particular 12,000 g/mol to 22,000 g/mol, and is present in amounts of from 0 to 20 wt.-%, based on the total weight of the polyamide composition, preferably 1 to 15 wt.-%, and in particular 2 to 10 wt.-%.

The at least one polyamide selected from homopolymers of hexamethylenediamine and sebacic acid (PA6.10) has preferably a number average molecular weight (Mn), determined by gel permeation chromatography (GPC) of 10,000 g/mol to 28,000 g/mol, in particular 12,000 g/mol to 22,000 g/mol, and is present in amounts of from 0 to 20 wt.-%, based on the total weight of the polyamide composition, preferably 1 to 15 wt.-%, and in particular 2 to 10 wt.-%.

Therefore, the present invention relates to a polyamide composition, comprising
(i) 40 to 70 wt.-%, based on the total weight of the polyamide composition, of at least one aliphatic polyamide comprising repeating units derived from the polycondensation of hexamethylenediamine and adipic acid;
(ii) 4 to 30 wt.-%, based on the total weight of the polyamide composition, of at least one semi-aromatic polyamide comprising repeating units derived from the polycondensation of hexamethylenediamine, adipic acid and at least one aromatic dicarboxylic acid;
(iii) 10 to 40 wt.-%, based on the total weight of the polyamide composition, of at least one fibrous filler;
(iv) 1 to 20 wt.-%, based on the total weight of the polyamide composition, of at least one particulate filler;
(v) 0.1 to 2 wt.-%, based on the total weight of the polyamide composition, of at least one heat stabilizer;
(vi) 0.1 to 2 wt.-%, based on the total weight of the polyamide composition, of at least one further additive;
(vii) 0 to 20 wt.-%, based on the total weight of the polyamide composition, of at least one polyamide selected from homopolymers of ε -caprolactam (PA6), copolymers of ε - caprolactam with hexamethylenediamine and terephthalic acid and copolymers of ε - caprolactam with hexamethylenediamine and isophthalic acid; and
(viii) 0 to 20 wt.-%, based on the total weight of the polyamide composition, of at least one polyamide selected from homopolymers of hexamethylenediamine and sebacic acid (PA6.10),
wherein the components (i) to (viii) and preferred embodiments thereof are as defined above.

The polyamide compositions of the invention are generally prepared by mixing in a twin-screw extruder or single-screw polyamide and different loads.

The polyamide composition is extruded as rods which are cut to form granules

The polyamide composition preferably has a flexural strength after aging at 130°C for 1000 hours in a glycol/water mixture (1:1) of > 15 MPa, in particular of > 25 MPa (determined as described in the experimental section).

The polyamide composition preferably has a flexural strength at 23°C (according to ISO 178) of > 160 MPa, more preferably > 180 MPa, and in particular > 200 MPa (determined as described in the experimental section).

The polyamide composition preferably has a tensile strength DAM at 23°C (according to ISO 527-2/1A) of > 125 MPa, in particular > 135 MPa (determined as described in the experimental section).

The polyamide composition preferably has a Charpy unnotched impact strength at 23°C (according to ISO 179/1 eU) of > 30 kJ/m², more preferred > 35 kJ/m², and in particular > 40 kJ/m² (determined as described in the experimental section).

The polyamide composition preferably has a Charpy notched impact strength at 23°C (according to ISO 179/1eA) of > 5 kJ/m², in particular > 6 kJ/m² (determined as described in the experimental section).

The polyamide composition preferably has a heat deformation temperature at 1.82 mPa (according to ISO 75/Af) of > 200°C, in particular > 210°C (determined as described in the experimental section).

The polyamide compositions of the invention may preferably be used for the preparation of an article in a liquid-assisted injection moulding process, in particular water-assisted injection moulding process. Liquid-assisted moulding processes of thermoplastic polymer compositions are known in the art and for example described in EP 1136221 A1 and in Kunststoffe, vol. 88, no. 1, 1998, pages 34-36.

A further object of the invention is concerned with a process for preparing an article, comprising at least the following process steps:
(a) providing a polyamide composition as defined above;
(b) preparing a substantially liquid melt of the polyamide composition; and
(c) conducting a liquid-assisted injection moulding process in order to obtain the article.

According to step (a) of the process, the polyamide composition as previously defined is provided, for example in form of its pellets. However, steps (a) and (b) may also be combined in one step, thus providing the components (i) to (viii) and combining them while melting the composition at the same time.

The polyamide composition is then liquefied, preferably by introducing to an optionally heatable mixing apparatus and blended therein, producing a substantially liquid-melt polymer mixture.

" Substantially liquid melt" means that the polymer mixture, as well as the predominant liquid-melt (softened) fraction, may further comprise a certain fraction of solid components, examples being unmelted fillers and reinforcing material such as glass fibers, glass beads or unmelted pigments, colorants, etc. " Liquid melt" means that the polymer mixture is at least of low fluidity, therefore having softened at least to an extent that it has plastic properties.

Mixing apparatuses used are those known to the skilled person. Components (i) to (vi), and - where included - (vii) and/or (viii) may be mixed, for example, by joint extrusion, kneading, or rolling. Examples of mixing apparatus for implementing the method include discontinuously operating, heated internal kneading devices, continuously operating kneaders, such as continuous internal kneaders, screw kneaders with axially oscillating screws, Banbury kneaders, furthermore extruders, and also roll mills, mixing roll mills with heated rollers, and calenders.

A preferred mixing apparatus used is an extruder or a kneader. Particularly suitable for melt extrusion are, for example, single-screw or twin-screw extruders. A twin-screw extruder is preferred.

In some cases the mechanical energy introduced by the mixing apparatus in the course of mixing is enough to cause the mixture to melt, meaning that the mixing apparatus does not have to be heated. Otherwise, the mixing apparatus is generally heated.

The temperature is guided by the chemical and physical properties of the polyamide composition and should be selected such as to result in a substantially liquid-melt polymer mixture. On the other hand, the temperature is not to be unnecessarily high, in order to prevent thermal damage of the polymer mixture. The mechanical energy introduced may, however, also be high enough that the mixing apparatus may even require cooling. Mixing apparatus is operated customarily at 150°C to 400°C, preferably 200°C to 350°C.

The substantially liquid melt is then introduced in the desired mould. In order to form hollow articles, a liquid, in particular water is introduced to the mould comprising the substantially liquid melt of the polyamide composition, in order to form at least one cavity in the article. After cooling below the melting point of the polyamide composition, the article may be released from the mould.

The method enables the manufacture of hollow articles having a uniform wall thickness and preferably of thickness less than 10 mm. These articles are especially elongate hollow body such as ducts, pipes, tubes or the like.

The surfaces of the articles, in particular the inner surfaces of the hollow articles, are particularly smooth compared to articles prepared from conventional fibre filled polyamide compositions. In particular, the inner surface of the hollow body is sufficiently smooth to permit fluid flow in the hollow body without disturbance.

Thus, the method of the invention allows the manufacture of conduits, pipes for fuel, coolant or air to the internal combustion engine or combustion.

Moreover, the articles are characterized by their good resistance against alcohols and alcoholic solutions, in particular against glycols and glycol solution (e.g. aqueous glycol solutions as used in antifreeze fluids and brake fluids). Accordingly, the polyamide composition of the invention is preferably used for the preparation of hollow articles to be used in automotive industry, in particular in engine oil tubes, brake hoses, conduits, pipes for fuel and/or coolant.

Thus, one further object of the present invention is an article comprising at least the polyamide composition of the invention. In particular, the invention is concerned with an article obtained by the process described above, in particular a hollow article.

Other advantages and details of the invention will become apparent from the examples given below for illustrative purposes only.

### EXAMPLES

### Preparation of the polyamide compositions:

As examples and comparative examples, several polyamide compositions were prepared.

The following components were used as starting materials:
Component (i):
   (i-a) PA6.6 homopolymer
   (i-b) PA6.6/6 copolymer having a molar composition of repeating units derived from hexamethylene diamine : adipic acid : ε -caprolactam of 45.0 % : 45.0 % : 10.0 %(in mol-% each)
Component (ii):
   (ii-a) PA6.6/6.T copolymer having a molar composition of repeating units derived from hexamethylene diamine : terephthalic acid : adipic acid of 50.0 % : 32.5 % : 17.5 % (in mol-% each)
   (ii-b) PA6.T/6.I copolymer having a molar composition of repeating units derived from hexamethylene diamine : terephthalic acid : isophthalic acid of 50.0 % : 35.0 % : 15.0 % (in mol-% each)
Component (iii):
   (iii) glass fibre chopped strands having an average length of 4.5 mm and an average diameter of 10 µm
Component (iv):
   (iv-a) glass beads having an average diameter of 20 µm
   (iv-b) glass beads having an average diameter of 40 µm
   (iv-c) glass beads having an average diameter of 5 µm
   (iv-d) glass beads having an average diameter of 100 µm
Component (v):
   (v) copper salts as heat stabilizer
Component (vi):
   (vi-a) ethylene bis-stearamide as mould release agent
   (vi-b) colorants (solvent black / nigrosine)
   (vi-c) modified ethylene bis-stearamide (TAF, surface improvement agent)
Component (vii)
   (vii) PA6 homopolymer
Component (viii):
   (viii) PA6.10 homopolymer
Component (ix):
   (ix) PA6/6T copolymer

Compositions for moulding according to the invention were prepared by mixing in a twin-screw type extruder ZSK 18 W at a rate of 12 kg / h and a rotation speed of equal screw 300 rev / min, at a temperature in the range of from 265°C to 340°C, depending on the formulation of the various components and amounts as disclosed in Table 1 below.

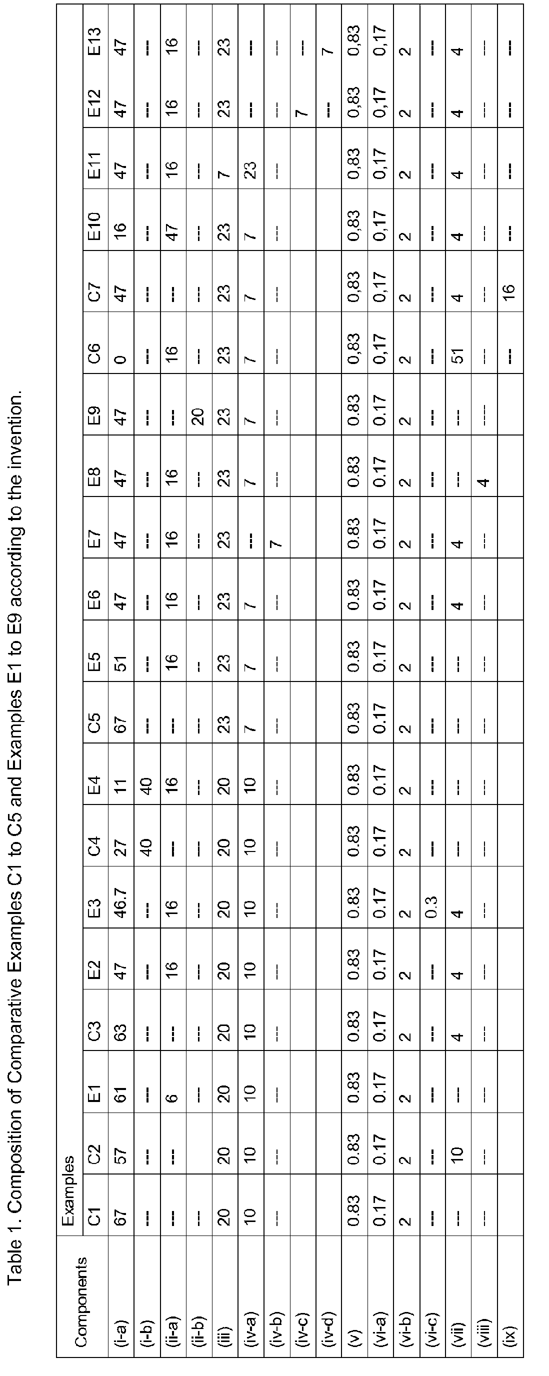

Samples were prepared from each of these compositions C1 to C5 and E1 to E9 in accordance with the demands described below.

The following properties were determined:

### Tensile Strength:

Tensile strength was determined according to ISO 527-2/1A. Values are given in MPa

### Flexural strength:

Determination of flexural strength at maximum load was carried out according to ISO 178 with test samples having a size of 50 x 6 mm and a thickness of 4 mm. Support separation: 40 mm. Test rate was 14 mm/min. Values are given in MPa.

### Charpy unnotched impact strength:

Charpy unnotched impact strength was determined according to ISO 179/1eU with test samples having a size of 50 x 6 mm and a thickness of 4 mm. Support separation: 40 mm. Test equipment: 4 J pendulum impact tester. Values are given in kJ/m².

### Charpy notched impact strength:

Charpy notched impact strength was determined according to ISO 179/1eA with test samples having a size of 50 x 6 mm and a thickness of 4 mm. Support separation: 40 mm. Test equipment: 4 J pendulum impact tester. A 0.8 mm-wide U-shaped notch was made on the broad side of the specimens. The notch depth was 1/3 of the specimen thickness. The edges outlining the notch root had a curvation radius of < 0.1 mm. Values are given in kJ/m².

### Heat deformation temperature:

Heat deformation temperature was determined at 1.82 MPa according to ISO 75/Af. Values are given in °C.

### Flexural strength after aging

Flexural strength after aging was determined after aging the specimen (prepared by injection moding according to DIN EN ISO 527-2/1A) in a glycol/water mixture (1:1 by weight) at 130°C for 1000 hours. Following the aging process, flexural strength was determined according to DIN EN ISO 178 at room temperature with the undried specimen after 1 hour. Values are given in MPa.

### Gloss with flat chip:

Surface gloss was tested using a Benchtop Spectrophotometer (model Ci7800 manufactured by X-rite^{®}, Inc.). The testing was made in gloss test. The specimens were flat chips having dimensions of 9 x 6 x 2 mm.

### Spiral flow:

The polyamide composition is melted and then injected into a spiral shaped moulding cavity mounted on an injection-moulding machine under real processing conditions. The spiral length with 2 mm thickness can be determined as a function of melt temperature, injection pressure and the mould temperature and is a direct measure for the flowability (i.e. viscosity) of the polyamide composition.

### Results of the tests:

The results of the tests for all Examples and Comparative Examples are summarized in Table 2.

As shown in Table 1, Comparative Example C1 is a PA6.6 based composition filled with glass fibres and glass beads. C1 exhibits a gloss with flat chip of 76.8.

In Comparative Example C2, 10 wt.-% of the PA6.6 are substituted by PA6, a well-known additive to improve the surface of glass fibre filled PA66 compositions (cf. Table 1). The gloss is improved from 76.8 to 90.3 (cf. Table 2).

However, according to inventive Example E1, substituting 6 wt.-% of PA6.6 by PA6.6/6.T results in an improvement of surface gloss with flat chip to 91.6 (cf. Tables 1 and 2). Thus, although E1 comprises only 6 wt.-% of PA6.6/6.T compared to 10 wt.-% of PA6 used in Comparative Example C2, a higher surface gloss was achieved (91.6 for Example E1 compared to 90.3 for Comparative Example C2). PA6.6/6.T thus results in significantly higher surface improvement compared to PA6.

Moreover, flexural strength of the PA6 containing sample according to Comparative Example C2 was significantly deteriorated after aging in glycol/water. Comparative Example E1 exhibits a value for 70 MPa, which decreases to 46 MPa for Comparative Example 2 comprising PA6. By contrast, introducing PA6.6/6.T resulted in only far lower decrease of flexural strength after aging from 70 MPa (Comparative Example C1) to 63 MPa (Example E1).

In addition also the further determined mechanical properties such as tensile strength, flexural strength, Charpy unnotched impact strength, Charpy notched impact strength, heat deformation temperature, and spiral flow remain substantially unchanged in Example E1 compared to Comparative Example C1.

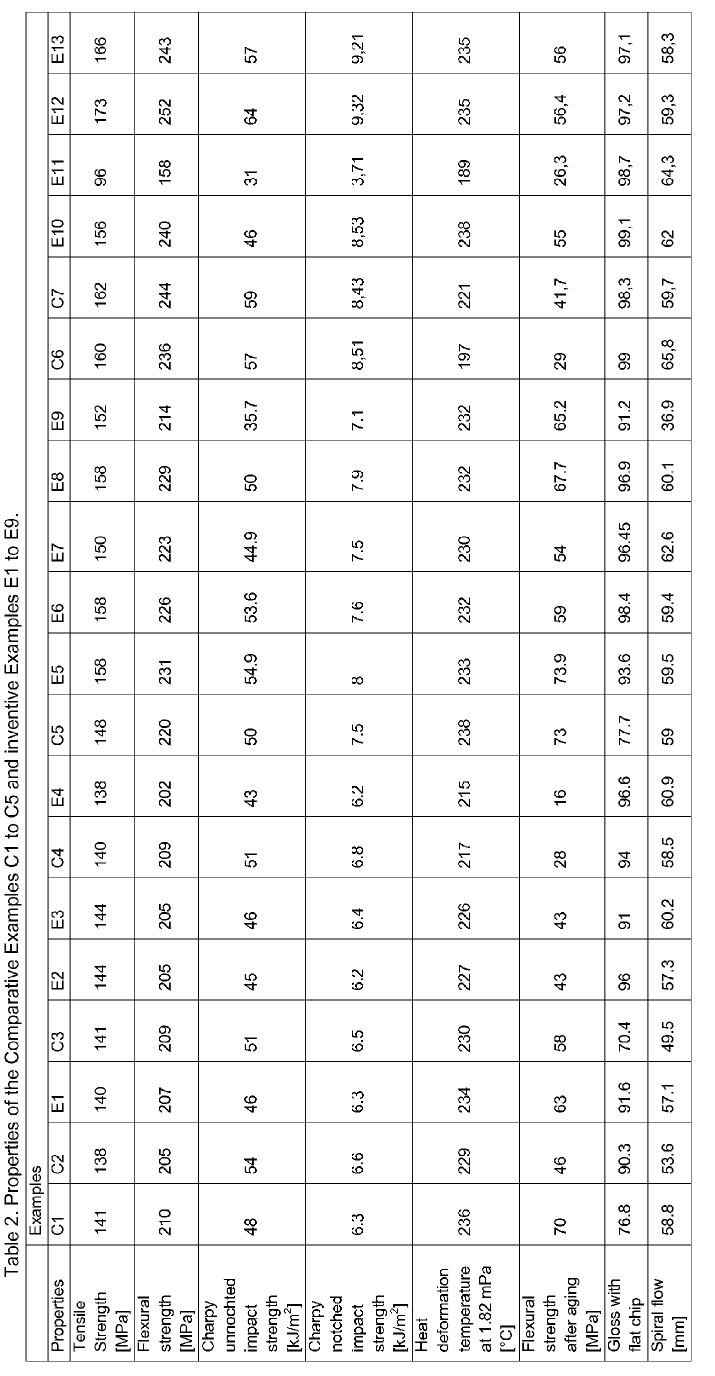

The comparison of Comparative Example C3 and Examples E2 and E3 reveals that also the properties of blends of PA6.6 and PA6 comprising glass fibres may further be improved by the addition of PA6.6/6.T (cf. Tables 1 and 2). Just like Comparative Example C1, all three Examples C3, E2 and E3 comprise a sum of about 67 wt.-% of polyamide. However, in each of the three examples C3, E2 and E3, 4 wt.-% of the PA6.6 is replaced by PA6. Additionally in Examples E2 and E3, further 16 wt.-% of the PA6.6 is replaced by 16 wt.-% of PA6.6/6.T (Example E2, cf. Table 1) or by 15.7 wt.-% of PA6.6/6.T and 0.3 wt.-% of TAF, a modified ethylene bis-stearamide which is reported to improve the surface of glass fibre filled polymer compositions (Example E3, cf. Table 1).

As can be seen in Table 2, substituting 16 wt.-% of the PA6.6 of the polyamide composition according to Comparative Example C3 results in an improvement of the surface gloss from 70.4 to 96 in Example E2. The incorporation of TAF, however, failed to further improve surface gloss. In contrast, Example E3 resulted in a lower gloss than E2 (96 for Example E2 compared to 91 for Example E3, cf. Table 2). However, both Examples E2 and E3 have a substantially higher surface gloss than Comparative Example C3.

In addition also the further determined mechanical properties such as tensile strength, flexural strength, Charpy unnotched impact strength, Charpy notched impact strength, heat deformation temperature, and spiral flow remain substantially unchanged in Examples E2 and E3 compared to Comparative Example C2. Flexural strength of Examples E2 and E3 remains above 43.

Comparative Example C4 and Example E4 demonstrate the effect of the invention in polyamide compositions comprising PA6.6 and PA6.6/6. Again, both example compositions comprise 67 wt.-% of polyamides. In particular, both comprise 40 wt.-% of PA6.6/. Comparative Example C4 further comprises 27 wt.-% of PA6.6, whereas Example E4 comprises 11 wt.-% of PA6.6 and 16 wt.-% of PA6.6/6.T (cf. Table 1. The remainder is identical in both compositions.

As can be seen in Table 2, surface gloss is improved from 94 for Comparative Example C4 to 96.6 for Example E4. In addition, also the further determined mechanical properties such as tensile strength, flexural strength, Charpy unnotched impact strength, Charpy notched impact strength, and heat deformation temperature remain substantially unchanged in Example E4 compared to Comparative Example C4. Moreover, spiral flow is improved.

Compared to the previous discussed examples and comparative examples, Comparative Example C5 and Examples E5 to E9 comprise a higher amount of glass fibre filler (23 wt.-% instead of 20 wt.-%), whereas the overall amount of filler remains unchanged at 30 wt.-% (cf. Table 1).

Comparative Example C5 comprises PA6.6 as only polyamide and exhibits a surface gloss of 77.7. By replacing 16 wt.-% of the PA6.6 by PA6.6/6.T (cf. Example E5 in Table 1), in improvement of gloss from 77.7 to 93.6 is observed (cf. Comparative Example E5 and Example E5 Table 2).

In Example E6, further 4 wt.-% of PA6.6 were substituted by PA6 compared to Example E5 (cf. Table 1) while maintaining the total amount of polyamide unchanged. This results in a further improvement of the surface gloss from 93.6 for Example E5 (or 77.7 for Comparative Example C5, respectively) to 98.4 for Example E6 (cf. Table 2). Example 7 differs from Example 6 in comprising glass beads with an average particle diameter of 40 µm instead of 20 µm. Comparable results are obtained.

In Example E8, further 4 wt.-% of PA6.6 were substituted by PA6.10 compared to Example E5 (cf. Table 1) while maintaining the total amount of polyamide unchanged. This also results in an improvement of the surface gloss from 93.6 for Example E5 (or 77.7 for Comparative Example C5, respectively) to 96.9 for Example E8 (cf. Table 2).

In Example E9, further 20 wt.-% of PA6.6 were substituted by PA6.T/6.I compared to Comparative Example C5 (cf. Table 1) while maintaining the total amount of polyamide unchanged. This results in a further improvement of the surface gloss from 77.7 for Comparative Example C5 to 91.2 for Example E9 (cf. Table 2).

In addition, also further mechanical properties are improved. For example, tensile strength before aging is improved for all Examples E5 to E9 compared to Comparative Example C5. On the other hand, the tensile strength after aging in glycol/water mixture is only slightly deteriorated for Examples E5 to E9 and in particular Examples E5, E8 and E9 compared to Comparative Example C5. Likewise, good results or even improvements in properties such as flexural strength, Charpy unnotched impact strength, Charpy notched impact strength, heat deformation temperature, and spiral flow were observed and often remained substantially unchanged in Examples E5 and E9 compared to Comparative Example C5.

Comparative Example C6 demonstrates the advantageous effects of the presence of PA6.6 or a copolymer thereof in the composition. Since major application of the compositions of the invention are coolant tubes, excellent coolant resistance is needed. If PA6.6 is replaced with PA6, a significant decline in the glycol resistance is observed. Moreover, the heat deformation temperature decreases.

Comparative Example C7 demonstrates the advantageous effects of the presence of PA6.6/6.T as compared to PA6/6.T in the composition. If PA6.6/6T is replaced with PA6/6T, a significant decline in glycol resistance is observed. Moreover, the heat deformation temperature decreases.

Example E10 demonstrates the advantageous effects due to the amount (ratio) of PA6.6 and PA6.6/6.T in the composition. The ratio of PA6.6 to PA 6.6/6T affects the Charpy unnotched impact and glycol resistance.

Example E11 demonstrates the relevance of the amount (ratio) of fibrous and particulate filler for the observed technical effect. The ratio affects the mechanical properties, the heat deformation temperature and the glycol resistance.

Examples E12 and E13 demonstrate the influence of particle fillers having particle diameters of more than 60 µm and less than 20 µm, respectively.

### Conclusion:

The above examples and comparative examples show that the surface properties, in particular surface gloss of an article prepared from a polyamide composition comprising at least one aliphatic polyamide, at least one semi-aromatic polyamide, at least one fibrous filler, at least one particulate filler, at least one heat stabilizer, and at least one further additive as defined above, is significantly improved compared to polyamide compositions which do not comprise the at least one semi-aromatic polyamide. At the same time, further mechanical properties typically remain substantially unchanged. In particular, the polyamide composition in accordance with the present invention exhibits a good resistance towards alcohols, in particular glycols, as indicated by the comparably good flexural strength after aging was determined after aging the sample in a glycol/water mixture (1:1 by weight) at 130°C for 1000 hours. The polyamide compositions are therefore exceptionally well suited to be used in the production of articles which are intended to be in contact with glycol and glycol mixtures, such as hollow articles to be used in the automotive industry.

## Claims

1. Polyamide composition, comprising
(i) 40 to 70 wt.-%, based on the total weight of the polyamide composition, of at least one aliphatic polyamide comprising repeating units derived from the polycondensation of hexamethylenediamine and adipic acid;
(ii) 4 to 30 wt.-%, based on the total weight of the polyamide composition, of at least one semi-aromatic polyamide comprising repeating units derived from the polycondensation of hexamethylenediamine, adipic acid and at least one aromatic dicarboxylic acid;
(iii) 10 to 40 wt.-%, based on the total weight of the polyamide composition, of at least one fibrous filler;
(iv) 1 to 20 wt.-%, based on the total weight of the polyamide composition, of at least one particulate filler;
(v) 0.1 to 2 wt.-%, based on the total weight of the polyamide composition, of at least one heat stabilizer;
(vi) 0.1 to 2 wt.-%, based on the total weight of the polyamide composition, of at least one further additive;
(vii) 0 to 20 wt.-%, based on the total weight of the polyamide composition, of at least one polyamide selected from homopolymers of ε -caprolactam (PA6), copolymers of ε -caprolactam with hexamethylenediamine and terephthalic acid and copolymers of ε -caprolactam with hexamethylenediamine and isophthalic acid; and
(viii) 0 to 20 wt.-%, based on the total weight of the polyamide composition, of at least one polyamide selected from homopolymers of hexamethylenediamine and sebacic acid (PA6.10).

2. Polyamide composition according to claim 1, wherein the at least one semi-aromatic polyamide comprises repeating units derived from at least one aromatic dicarboxylic acid in an amount of at least 5 mol.-%, based on the total weight of the at least one semi-aromatic polyamide.

3. Polyamide composition according to claim 1 or 2, wherein the at least one semi-aromatic polyamide is selected from homopolymers and/or copolymers of hexamethylenediamine and adipic acid with terephthalic acid and/or isophthalic acid.

4. Polyamide composition according to any of claims 1 to 3, wherein the at least one semi-aromatic polyamide is selected from copolymers of hexamethylenediamine, adipic acid and terephthalic acid (PA6.6/6.T), copolymers of hexamethylenediamine, adipic acid and isophthalic acid (PA6.6/6.I), copolymers of hexamethylenediamine, adipic acid, terephthalic acid and isophthalic acid (PA6.6/6.T/6.I) and mixtures of these semi-aromatic polyamides.

5. Polyamide composition according to any of claims 1 to 4, wherein the at least one aliphatic polyamide is selected from homopolymers of hexamethylenediamine and adipic acid (PA6.6), copolymers of hexamethylenediamine, adipic acid and ε -caprolactam (PA6.6/6) and mixtures of these aliphatic polyamides.

6. Polyamide composition according to any of claims 1 to 5, wherein the at least one fibrous filler is selected from glass fibres, ceramic fibres, carbon fibres, and thermostable polymer fibres.

7. Polyamide composition according to any of claims 1 to 6, wherein the at least one particulate filler is selected from mineral fillers, glass beads, glass flakes, milled glass fibres.

8. Polyamide composition according to any of claims 1 to 7, wherein the at least one fibrous filler is selected from glass fibres and the at least particulate filler is selected from glass beads.

9. Polyamide composition according to any of claims 1 to 8, wherein the at least one additive is selected from colorants, mould release agents, flame retardants, toughening modifiers, and additives to facilitate the mixing of the components or the moulding of the composition.

10. Polyamide composition according to any of claims 1 to 9, wherein the at least one aliphatic polyamide is selected from homopolymers of hexamethylenediamine and adipic acid (PA6.6) and copolymers of hexamethylenediamine, adipic acid and ε -caprolactam (PA6.6/6) and wherein only the repeating units derived from hexamethylenediamine and adipic acid account to the amount of 40 to 70 wt.-% of the at least one aliphatic polyamide based on the total weight of the polyamide composition.

11. Use of the polyamide composition according to any of claims 1 to 10 for the preparation of an article in a liquid-assisted injection moulding process.

12. Process for preparing an article, comprising at least the following process steps:
(a) providing a polyamide composition according to any of claims 1 to 10;
(b) preparing a substantially liquid melt of the polyamide composition; and
(c) conducting a liquid-assisted injection moulding process in order to obtain the article.

13. Article comprising at least the polyamide composition according to any of claims 1 to 10.

14. Article according to claim 14, obtained by the process according to claim 12.

## Patentansprüche

1. Polyamidzusammensetzung, umfassend
(i) 40 bis 70 Gew.-%, bezogen auf das Gesamtgewicht der Polyamidzusammensetzung, mindestens eines aliphatischen Polyamids, das Wiederholungseinheiten umfasst, die sich aus der Polykondensation von Hexamethylendiamin und Adipinsäure ergeben;
(ii) 4 bis 30 Gew.-%, bezogen auf das Gesamtgewicht der Polyamidzusammensetzung, mindestens eines teilaromatischen Polyamids, das Wiederholungseinheiten umfasst, die sich aus der Polykondensation von Hexamethylendiamin, Adipinsäure und mindestens einer aromatischen Dicarbonsäure ergeben;
(iii) 10 bis 40 Gew.-%, bezogen auf das Gesamtgewicht der Polyamidzusammensetzung, mindestens eines faserförmigen Füllstoffs;
(iv) 1 bis 20 Gew.-%, bezogen auf das Gesamtgewicht der Polyamidzusammensetzung, mindestens eines teilchenförmigen Füllstoffs;
(v) 0,1 bis 2 Gew.-%, bezogen auf das Gesamtgewicht der Polyamidzusammensetzung, mindestens eines Wärmestabilisators;
(vi) 0,1 bis 2 Gew.-%, bezogen auf das Gesamtgewicht der Polyamidzusammensetzung, mindestens eines weiteren Additivs;
(vii) 0 bis 20 Gew.-%, bezogen auf das Gesamtgewicht der Polyamidzusammensetzung, mindestens eines Polyamids, das aus Homopolymeren von ε-Caprolactam (PA6), Copolymeren von ε-Caprolactam mit Hexamethylendiamin und Terephthalsäure und Copolymeren von ε-Caprolactam mit Hexamethylendiamin und Isophthalsäure ausgewählt ist; und
(viii) 0 bis 20 Gew.-%, bezogen auf das Gesamtgewicht der Polyamidzusammensetzung, mindestens eines Polyamids, das aus Homopolymeren von Hexamethylendiamin und Sebacinsäure (PA6.10) ausgewählt ist.

2. Polyamidzusammensetzung nach Anspruch 1, wobei das mindestens eine teilaromatische Polyamid von mindestens einer aromatischen Dicarbonsäure abgeleitete Wiederholungseinheiten in einer Menge von mindestens 5 Mol-%, bezogen auf das Gesamtgewicht des mindestens einen teilaromatischen Polyamids, umfasst.

3. Polyamidzusammensetzung nach Anspruch 1 oder 2, wobei das mindestens eine teilaromatische Polyamid aus Homopolymeren und/oder Copolymeren von Hexamethylendiamin und Adipinsäure mit Terephthalsäure und/oder Isophthalsäure ausgewählt ist.

4. Polyamidzusammensetzung nach einem der Ansprüche 1 bis 3, wobei das mindestens eine teilaromatische Polyamid aus Copolymeren von Hexamethylendiamin, Adipinsäure und Terephthalsäure (PA6.6/6.T), Copolymeren von Hexamethylendiamin, Adipinsäure und Isophthalsäure (PA6.6/6.1), Copolymeren von Hexamethylendiamin, Adipinsäure, Terephthalsäure und Isophthalsäure (PA6.6/6.T/6.I) und Mischungen dieser teilaromatischen Polyamide ausgewählt ist.

5. Polyamidzusammensetzung nach einem der Ansprüche 1 bis 4, wobei das mindestens eine aliphatische Polyamid aus Homopolymeren von Hexamethylendiamin und Adipinsäure (PA6.6), Copolymeren von Hexamethylendiamin, Adipinsäure und ε-Caprolactam (PA6.6/6) und Mischungen dieser aliphatischen Polyamide ausgewählt ist.

6. Polyamidzusammensetzung nach einem der Ansprüche 1 bis 5, wobei der mindestens eine faserförmige Füllstoff aus Glasfasern, Keramikfasern, Kohlefasern und thermostabilen Polymerfasern ausgewählt ist.

7. Polyamidzusammensetzung nach einem der Ansprüche 1 bis 6, wobei der mindestens eine teilchenförmige Füllstoff aus Mineralfüllstoffen, Glasperlen, Glasflakes und gemahlenen Glasfasern ausgewählt ist.

8. Polyamidzusammensetzung nach einem der Ansprüche 1 bis 7, wobei der mindestens eine faserförmige Füllstoff aus Glasfasern ausgewählt ist und der mindestens eine teilchenförmige Füllstoff aus Glasperlen ausgewählt ist.

9. Polyamidzusammensetzung nach einem der Ansprüche 1 bis 8, wobei das mindestens eine Additiv aus Farbmitteln, Formtrennmitteln, Flammschutzmitteln, Zähigkeitsvermittlern und Additiven zur Erleichterung des Mischens der Komponenten oder des Formens der Zusammensetzung ausgewählt ist.

10. Polyamidzusammensetzung nach einem der Ansprüche 1 bis 9, wobei das mindestens eine aliphatische Polyamid aus Homopolymeren von Hexamethylendiamin und Adipinsäure (PA6.6) und Copolymeren von Hexamethylendiamin, Adipinsäure und ε-Caprolactam (PA6.6/6) ausgewählt ist und wobei nur die von Hexamethylendiamin und Adipin abgeleiteten Wiederholungseinheiten zu der Menge von 40 bis 70 Gew.-% des mindestens einen aliphatischen Polyamids, bezogen auf das Gesamtgewicht der Polyamidzusammensetzung, beitragen.

11. Verwendung der Polyamidzusammensetzung nach einem der Ansprüche 1 bis 10 zur Herstellung eines Gegenstands in einem flüssigkeitunterstützten Spritzgussverfahren.

12. Verfahren zur Herstellung eines Gegenstands, das mindestens die folgenden Verfahrensschritte umfasst:
(a) Bereitstellen einer Polyamidzusammensetzung nach einem der Ansprüche 1 bis 10;
(b) Herstellen einer weitgehend flüssigen Schmelze der Polyamidzusammensetzung und
(c) Durchführen eines flüssigkeitunterstützten Spritzgussverfahrens zum Erhalt des Gegenstands.

13. Gegenstand, umfassend die mindestens eine Polyamidzusammensetzung nach einem der Ansprüche 1 bis 10.

14. Gegenstand nach Anspruch 14, erhalten durch das Verfahren nach Anspruch 12.

## Revendications

1. Composition de polyamide, comprenant
(i) 40 à 70 % en poids, sur la base du poids total de la composition de polyamide, d'au moins un polyamide aliphatique comprenant des motifs répétitifs issus de la polycondensation d'hexaméthylènediamine et d'acide adipique ;
(ii) 4 à 30 % en poids, sur la base du poids total de la composition de polyamide, d'au moins un polyamide semi-aromatique comprenant des motifs répétitifs issus de la polycondensation d'hexaméthylènediamine, d'acide adipique et d'au moins un acide dicarboxylique aromatique ;
(iii) 10 à 40 % en poids, sur la base du poids total de la composition de polyamide, d'au moins une charge fibreuse ;
(iv) 1 à 20 % en poids, sur la base du poids total de la composition de polyamide, d'au moins une charge particulaire ;
(v) 0,1 à 2 % en poids, sur la base du poids total de la composition de polyamide, d'au moins un stabilisant thermique ;
(vi) 0,1 à 2 % en poids, sur la base du poids total de la composition de polyamide, d'au moins un additif supplémentaire ;
(vii) 0 à 20 % en poids, sur la base du poids total de la composition de polyamide, d'au moins un polyamide choisi parmi des homopolymères de ε-caprolactame (PA6), des copolymères de ε-caprolactame avec l'hexaméthylènediamine et l'acide téréphtalique et des copolymères de ε-caprolactame avec l'hexaméthylènediamine et l'acide isophtalique ; et
(viii) 0 à 20 % en poids, sur la base du poids total de la composition de polyamide, d'au moins un polyamide choisi parmi des homopolymères d'hexaméthylènediamine et d'acide sébacique (PA6.10) .

2. Composition de polyamide selon la revendication 1, l'au moins un polyamide semi-aromatique comprenant des motifs répétitifs issus d'au moins un acide dicarboxylique aromatique en une quantité d'au moins 5 % en moles, sur la base du poids total de l'au moins un polyamide semi-aromatique.

3. Composition de polyamide selon la revendication 1 ou 2, l'au moins un polyamide semi-aromatique étant choisi parmi des homopolymères et/ou copolymères d'hexaméthylènediamine et d'acide adipique avec l'acide téréphtalique et l'acide isophtalique.

4. Composition de polyamide selon l'une quelconque des revendications 1 à 3, l'au moins un polyamide semi-aromatique étant choisi parmi des copolymères d'hexaméthylènediamine, d'acide adipique et d'acide téréphtalique (PA6.6/6.T), des copolymères d'hexaméthylènediamine, d'acide adipique et d'acide isophtalique (PA6.6/6.1), des copolymères d'hexaméthylènediamine, d'acide adipique, d'acide téréphtalique et d'acide isophtalique (PA6.6/6.T/6.I) et des mélanges de ces polyamides semi-aromatiques.

5. Composition de polyamide selon l'une quelconque des revendications 1 à 4, l'au moins un polyamide aliphatique étant choisi parmi des homopolymères d'hexaméthylènediamine et d'acide adipique (PA6.6), des copolymères d'hexaméthylènediamine, d'acide adipique et de ε-caprolactame (PA6.6/6) et des mélanges de ces polyamides aliphatiques.

6. Composition de polyamide selon l'une quelconque des revendications 1 à 5, l'au moins une charge fibreuse étant choisie parmi des fibres de verre, des fibres de céramiques, des fibres de carbone, et des fibres de polymère thermostable.

7. Composition de polyamide selon l'une quelconque des revendication 1 à 6, l'au moins une charge particulaire étant choisie parmi des charges minérales, des billes de verre, des flocons de verre, des fibres de verre moulues.

8. Composition de polyamide selon l'une quelconque des revendications 1 à 7, l'au moins une charge fibreuse étant choisie parmi des fibres de verre et l'au moins une charge particulaire étant choisie parmi des billes de verre.

9. Composition de polyamide selon l'une quelconque des revendications 1 à 8, l'au moins un additif étant choisi parmi des matières colorantes, des agents de démoulage, des agents ignifugeants, des modificateurs de la ténacité, et des additifs pour faciliter le mélange des composants ou le moulage de la composition.

10. Composition de polyamide selon l'une quelconque des revendications 1 à 9, l'au moins un polyamide aliphatique étant choisi parmi des homopolymères d'hexaméthylènediamine et d'acide adipique (PA6.6), des copolymères d'hexaméthylènediamine, d'acide adipique et de ε-caprolactame (PA6.6/6) et seulement les motifs répétitifs issus d'hexaméthylènediamine et d'acide adipique représentant la quantité de 40 à 70 % en poids de l'au moins un polyamide aliphatique sur la base du poids total de la composition de polyamide.

11. Utilisation de la composition de polyamide selon l'une quelconque des revendications 1 à 10 pour la préparation d'un article dans un procédé de moulage par injection assisté par un liquide.

12. Procédé pour la préparation d'un article, comprenant au moins les étapes de procédé suivantes :
(a) fourniture d'une composition de polyamide selon l'une quelconque des revendications 1 à 10 ;
(b) préparation d'une masse fondue sensiblement liquide de la composition de polyamide ; et
(c) conduite d'un procédé de moulage par injection assisté par un liquide afin d'obtenir l'article.

13. Article comprenant au moins la composition de polyamide selon l'une quelconque des revendications 1 à 10.

14. Article selon la revendication 14, obtenu par le procédé selon la revendication 12.
